# EUROPÄISCHE PATENTSCHRIFT

(11) **EP 3 217 583 B1**
(45) Veröffentlichungstag und Bekanntmachung des Hinweises auf die Patenterteilung: **12.08.2020**
(21) Anmeldenummer: 17160895.3
(22) Anmeldetag: 22.02.2008
(51) Int. Cl.: H04L 1/00

(54) **DECODIERER UND VERFAHREN ZUM DECODIEREN EINER FOLGE VON DATENPAKETEN**
DECODER AND METHOD FOR DECODING A SEQUENCE OF PACKETS
DÉCODEUR ET PROCÉDÉ DE DÉCODAGE D'UNE SUITE DE PAQUETS DE DONNÉES

(30) Priorität: 20.03.2007 DE 102007013315; 19.04.2007 DE 102007018484; 19.04.2007 US 912839 P
(43) Veröffentlichungstag der Anmeldung: 13.09.2017
(62) Teilanmeldung aus: 08715971.1
(73) Patentinhaber: Fraunhofer-Gesellschaft zur Förderung der angewandten Forschung e.V., 80686 München (DE)
(72) Erfinder: Sperschneider, Ralph, 91320 Ebermannstadt (DE); Lutzky, Manfred, 90427 Nürnberg (DE); Schuldt, Michael, 85716 Unterschleißheim (DE); Schnell, Markus, 90409 Nürnberg (DE); Gayer, Marc, 91058 Erlangen (DE); Lohwasser, Markus, 91217 Hersbruck (DE)
(74) Vertreter: Zinkler, Franz

(56) Entgegenhaltungen:
- EP-A- 0 756 267
- EP-A- 1 458 145
- EP-A- 1 589 330
- WO-A-95/01682
- GB-A- 2 306 861
- US-A1- 2005 058 145

## Beschreibung

Die vorliegendende Beschreibung bezieht sich auf Datenkommunikationsanwendungen und insbesondere auf die Echtzeit-Kommunikation von Audiosignalen über paketorientierte Netzwerke.

Im Rahmen der Echtzeit-Kommunikation über paketorientierte Netzwerke wie beispielsweise Voice over IP (VoIP) kann normalerweise nicht sichergestellt werden, dass alle Pakete in der erforderlichen Zeit beim Empfänger eintreffen. Dies liegt daran, dass bei einem paketorientierten Übertragen von Daten, wie beispielsweise über das Internet, verschiedene Pakete unterschiedliche Wege über das Datennetz nehmen, wobei die Wege über das Datennetz, die von den unterschiedlichen Paketen vom Sender der Pakete zum Empfänger der Pakete eingeschlagen werden können, von der aktuellen Netzsituation abhängen.

Selbst wenn also Pakete in ihrer Reihenfolge, in der sie erzeugt worden sind, abgeschickt werden, wird die Auftreffreihenfolge beim Empfänger mit hoher Wahrscheinlichkeit abweichen. Ein Paket, das einen günstigen Weg gefunden hat, kann sogar ein Paket "überholen", das zwar früher abgesendet worden ist, das aber einen längeren Weg vom Sender zum Empfänger genommen hat.

Für Anwendungen, die keinen Echtzeitbetrieb erfordern oder für Echtzeitanwendungen, bei denen relativ große Verzögerungen zugelassen werden, ist dies kein Problem, da ein Empfänger-Puffer einfach so lange puffert, bis alle Pakete einer Folge von Paketen eingetroffen sind. Wo ein Paket in einer Folge positioniert ist, kann beispielsweise durch eine Paketnummer oder durch einen Paketsequenzhinweis am Paket ermittelt werden, und der Empfänger führt dann vor der Wiedergabe oder Weitergabe der Pakete eine Sortierung in die richtige Reihenfolge durch.

Je kleiner dieser Puffer jedoch gewählt wird, bzw. je kleiner die zulässige Verzögerung ist, die ein Paket haben darf, wenn es vom Sender zum Empfänger übertragen wird, umso größer werden die Paketausfallraten werden. So wird ein Paketverlust nicht nur dann erhalten, wenn ein Paket tatsächlich verloren worden ist, sondern ein Paketverlust wird auch dann erhalten, wenn ein Paket vom Sender zum Empfänger zu lange gebraucht hat. Eine weitere Problemsituation besteht ferner darin, dass ein Paket auf seinem Weg vom Sender zum Empfänger eine Datenkorruption erfahren hat, also tatsächlich fehlerhaft ist.

Solche Verzögerungs-kritischen Anwendungen bestehen in der Internet-Telefonie (Voice over IP), bei der die Verzögerungsanforderungen, mit denen Pakete vom Sender zum Empfänger laufen müssen, relativ eng sind, damit die Gesprächsverbindung nicht abbricht. Insbesondere dann, wenn auf Senderseite ein Audiocodierer angeordnet ist und wenn auf der Empfängerseite ein Decodierer angeordnet ist, und wenn beim Empfänger keine zum Codieren vorhandenen Datenpakete mehr vorhanden sind, kann ein Verbindungsabbruch entstehen, nämlich dann, wenn der Decodierer auf Empfängerseite aufgrund der nicht mehr vorhandenen Daten "abstürzt".

Die WO 95/01682 A1 offenbart ein Konzept zur PCM-Verbindungs-Fehlerdetektion und zum Handhaben von verlorenen Blöcken. Insbesondere kommuniziert eine Basisstation mit einer mobilen Station, und die Basisstation selbst kommuniziert mit einer Basisstations-Steuerung. Sprachdaten werden in der Basisstations-Steuerung mit einem Sprach-Codierer codiert, zum Basisstations-Sender über eine PCM-Verbindung geschickt und von dort zur mobilen Station übermittelt. Die mobile Station decodiert und besorgt eine Wiedergabe und encodiert die von der mobilen Station empfangenen Sprachnachrichten und sendet sie denselben Weg zurück zur Basisstation-Steuerung. Der Basisstation-Sender detektiert einen Fehler in einem Datenblock, der über die PCM-Verbindung erhalten wird. Dies führt dazu, dass die Basisstation entweder eine Nachricht mit einer speziell vereinbarten Bedeutung an die mobile Station sendet, und zwar über den Fast Associated Control Channel (FACCH). Dieser Hinweis wird zur Mobilstation gesendet, die daraufhin eine Maskierung eines fehlerhaften Frames durchführt. Alternativ können auch andere wohldefinierte Daten auf den Benutzer-Kanal (UCH) gesendet werden, wobei dieser Kanal jedoch einen geringeren Fehlerschutz bietet.

Die GB-A-2 306 861 betrifft ein Verfahren zum Umgang mit fehlerhaften Audiorahmen entlang einer Multi-Hop-Verbindung. So wird eine Fehlerverschleierung für fehlerhafte Rahmen erst im Empfänger durchgeführt. Hierzu wird einem fehlerhaften Audiorahmen ein entsprechender Hinweis hinzugefügt, und das somit gebildete Ersatzpaket wird anstelle des fehlerhaften Rahmens weitergeleitet.

Die EP-A-0 756 267 betrifft die Rekonstruktion von fehlenden Audiopaketen an einem empfangenen Netzwerkknoten durch Einfügung von Ersatzpaketen, die ein syntaktisch- wie hörtechnisch "gültiges" weißes Rauschen beinhalten.

Die US 2005/058145 A1 offenbart das Stummschalten bzw. das Einspielen von Comfort Noise, sobald der Empfänger einen Paketverlust feststellt.

Die EP-A-1 589 330 befasst sich mit Inter- und Extrapolationstechniken, um den Audioinhalt verlorengegangener Datenpakete zu rekonstruieren.

Die EP-A-1 458 145 zeigt die Generierung von als solchen gekennzeichneten Ersatzpaketen im Falle eines festgestellten Paketverlustes.

Die Aufgabe der vorliegenden Erfindung besteht darin, ein Konzept zum Kommunizieren von Datenpaketen zu schaffen, das trotz kritischer Anforderung eine gute Kommunikationsqualität liefert.

Diese Aufgabe wird durch einen Erweiterungs-Decodierer nach Anspruch 1, ein Verfahren zum Decodieren nach Patentanspruch 20 oder ein Computer-Programm nach Patentanspruch 21 gelöst.

Erfindungsgemäß wird, um einen Absturz auf Decodiererseite bzw. um ein für einen Benutzer hörbares Artefakt auf Decodiererseite zu vermeiden, eine Detektion vorgenommen, ob ein Paket der Folge von Paketen fehlt oder fehlerhaft ist. Wird ein solcher Paketverlust oder Paketfehler festgestellt, so wird ein Ersatzpaket geliefert, wobei das Ersatzpaket im Hinblick auf die Paket-Syntax ein gültiges Paket ist, wobei jedoch ein Audioinhalt des Ersatzpaketes eine vorbestimmte Inhalts-Eigenschaft hat. Die Vorrichtung zum Senden der Folge von Datenpaketen gemäß der Erfindung gibt eine ungestörte Folge von Paketen aus, wobei jedoch fehlerhafte oder nicht erhaltene Pakete durch Ersatzpakete ersetzt worden sind, so dass sie von der Vorrichtung zum Senden ausgegebenen Folge wenigstens ein empfangenes Paket und ein Ersatzpaket aufweist. Bei einer Implementierung ist der Inhalt bzw. die Inhalts-Eigenschaft eines Pakets oder Frames bei einem Ersatzpaket von dem Audiosignal unabhängig, also hängt nicht von dem vorhergehenden oder nachfolgenden Paket oder Frame ab. Wenn das Paket aber einer Fehlerverschleierungsmaßnahme unterzogen wird, hängt der Synthese-Audioinhalt von dem vorhergehenden oder nachfolgenden Frame ab, ist also nicht vorbestimmt und ist nicht signalunabhängig.

Das Ersatzpaket hat ferner in einem Payloadbereich einen Hinweis darauf, dass es ein Ersatzpaket ist, wobei der Hinweis von einem Basis-Decodierer ignorierbar oder so interpretierbar ist, dass das Ersatzpaket wie ein gültiges Paket gemäß den vorbestimmten Inhalts-Eigenschaften decodiert wird, und wobei der Hinweis von einem Erweiterungs-Decodierer, der im Vergleich zum Basis-Decodierer eine erweiterte Funktionalität hat, interpretierbar ist, um eine Fehlerverschleierungsmaßnahme durchzuführen, die darin besteht, für das Ersatzpaket einen Inhalt zu erzeugen, der eine Inhalts-Eigenschaft hat, die sich von der vorbestimmten Inhalts-Eigenschaft unterscheidet. Das Ersatzpaket kann ein reines Payloadpaket sein oder kann ein Paket mit einem Payloadabschnitt und einem Headerabschnitt sein, wobei der Hinweis nicht im Headerabschnitt sondern vorzugsweise im Payloadabschnitt ist.

Ein Empfänger der Folge von Datenpaketen erhält nunmehr einen ungestörten Strom von Datenpaketen, die alle eine gültige Daten-Syntax haben. Dieser Empfänger wird diese Folge von Datenpaketen ohne Probleme decodieren können. Der Empfänger, wenn er ein Basis-Empfänger ist, wird ein Ersatzpaket also ohne weiteres dekodieren und wird den vorbestimmten Audioinhalt wiedergeben. Dies wird zwar zu einem Qualitätsverlust führen, da der Audioinhalt vorbestimmt ist, und somit nicht sehr gut zu dem vorhergehenden Paket oder Frame und zu dem nachfolgenden Paket oder Frame passt. Allerdings ist eine solche nur kurze vorübergehende Qualitätseinbuße unproblematisch im Vergleich zu einer Situation, in der der Decodierer aufgrund eines nicht vorhandenen Pakets vollständig abstürzt und damit die gesamte Kommunikationsverbindung abbricht.

Ein Erweiterungs-Decodierer ist dagegen in der Lage, anhand eines Hinweises in dem Ersatzpaket, der darauf hinweist, dass das Paket ein Ersatzpaket und nicht ein normales Paket ist, diese Tatsache zu erkennen und das Ersatzpaket nicht einfach zu verarbeiten, sondern dann, wenn ein Ersatzpaket empfangen worden ist, eine Fehlerverschleierungsmaßnahme einzuleiten.

Fehlerverschleierungsmaßnahmen umfassen neben Frame/Paket-Wiederholungen beispielsweise Extrapolationen von früheren Paketen oder von bereits im Speicher vorhandenen späteren Paketen oder Interpolationen zwischen früheren und späteren Paketen. Solche Extrapolationen oder Interpolationen umfassen insbesondere bandweise Energiemessungen, um dann in einem Fehlerverschleierungsfall ein Kurzzeitspektrum eines Audiosignals zu synthetisieren, dessen Spektralwerte mehr oder weniger zufällig erzeugt worden sind, wobei jedoch die bandweise Energie des zufällig erzeugten Audiosignals von den Energien der vorherigen und/oder nachfolgenden korrekt empfangenen oder bereits durch Fehlerverschleierungsmaßnahmen erzeugten Paketen abhängt.

Bei einem Ausführungsbeispiel ist die vorbestimmte Inhalts-Eigenschaft, die das Ersatzpaket hat, ein Nullspektrum. Dies führt dazu, dass ein Basis-Decodierer, der das vorbestimmte Ersatzpaket decodiert, eine Stummschaltung bzw. "Muting" durchführt. Alternativ kann die Inhalts-Eigenschaft ein Audiosignal sein, dessen Audioinhalt bzw. dessen Spektralwerte mit der absoluten Hörschwelle korrelieren und zum Beispiel dahin gehend definiert sind, dass der Audioinhalt kleiner als das 2-fache der absoluten Hörschwelle ist, so dass ein gewisses, aber kleines Rauschen über allen Bändern enthalten ist, was sich unter bestimmten Umständen subjektiv besser anhören kann als ein einfaches "Muting", also ein einfaches Stummschalten.

Ausführungsbeispiele der vorliegenden Erfindung werden nachfolgend bezugnehmend auf die Zeichnungen bzw. Anhänge detailliert erläutert. Es zeigen:
- Fig. 1: ein Blockschaltbild einer Ausführung der Vorrichtung zum Senden einer Folge von Datenpaketen;
- Fig. 2: ein Blockschaltbild eines Decodierers zum Decodieren einer Folge von Datenpaketen;
- Fig. 3: ein Blockschaltbild eines Audiocodierers zum Erzeugen einer Folge von Datenpaketen;
- Fig. 4: unter anderem eine speziellere Implementierung der Audioaufbereitungseinrichtung von Fig. 2;
- Fig. 5A: eine Sequenz von Datenpaketen, wie sie von einem Encodierer ausgegeben werden;
- Fig. 5B: eine Sequenz von Datenpaketen, wie sie von einer Basisstation empfangen werden;
- Fig. 5C: eine Folge von Datenpaketen, wie sie von einer Basisstation ausgegeben werden und von einem Mobilteil empfangen werden, wobei ein Ersatzpaket eingefügt worden ist;
- Fig. 5D: eine Folge von Audioinhalten, wie sie in einer Audioaufbereitungseinrichtung erzeugt werden;
- Anhang 1: eine Syntax der extension_payload gemäß ISO/IEC 14496-3:2005(E) MPEG4;
- Anhang 2: eine Tabelle zur Veranschaulichung der Werte für das Feld extension_type;
- Anhang 3: eine beispielhafte Paket-Syntax für einen Transformations-basierten Audiocodierer/Decodierer;
- Anhang 4: ein Beispiel eines Ersatzpakets mit einer gültigen Paket-Syntax und einer vorbestimmten Inhalts-Eigenschaft.

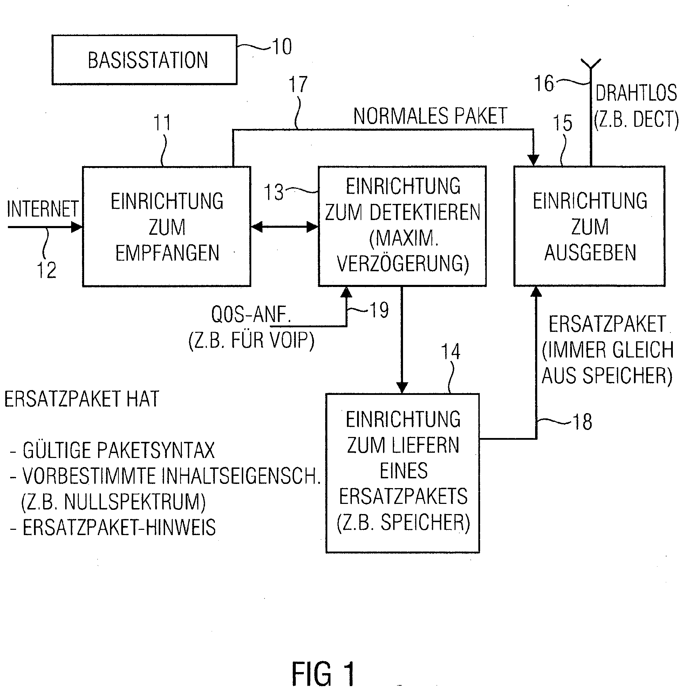

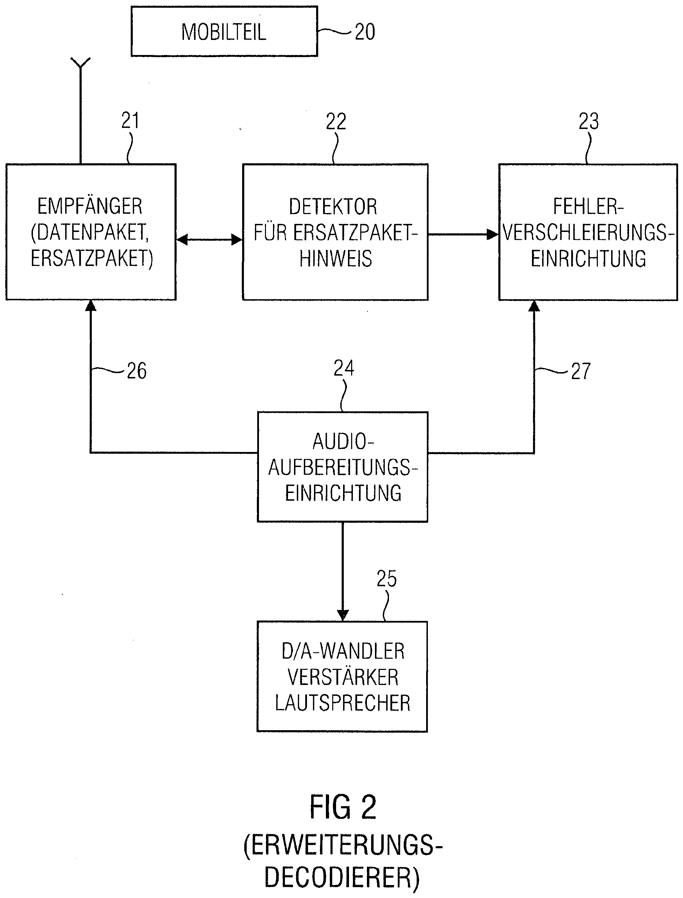

Fig. 1 zeigt eine Vorrichtung zum Senden einer Folge von Datenpaketen, die ein Audiosignal darstellen. Die Vorrichtung zum Senden, die in Fig. 1 beispielhaft als Basisstation 10 ausgebildet ist, umfasst eine Einrichtung 11 zum Empfangen von Paketen der Folge, wobei für die Pakete eine Paket-Syntax vorgeschrieben ist. Die Einrichtung 11 zum Empfangen ist beispielsweise mit einem paketorientierten Übertragungsnetz, wie beispielsweise dem Internet 12 verbunden. Die Basisstation 10 umfasst ferner eine Einrichtung 13 zum Detektieren, ob ein Paket der Folge von Paketen fehlt oder fehlerhaft ist. Ferner ist eine Einrichtung 14 zum Liefern eines Ersatzpakets vorgesehen, um das fehlerhafte Paket oder das fehlende Paket zu ersetzen. Das Ersatzpaket ist im Hinblick auf die Paket-Syntax ein gültiges Paket, der Audioinhalt des Ersatzpakets hat allerdings eine vorbestimmte Inhalts-Eigenschaft. Die Basisstation umfasst ferner eine Einrichtung 15 zum Ausgeben der Folge von Paketen, wobei die Folge von Paketen wenigstens ein empfangenes Paket und ein Ersatzpaket aufweist. Am Beispiel einer Basisstation ist die Einrichtung 15 zum Ausgeben ein HF-Front-End, das mit einer Antenne 16 gekoppelt ist, um gemäß einer bestimmten Spezifikation, wie beispielsweise der NG DECT-Spezifikation, eine Folge von Datenpaketen zu einem Mobilteil zu übertragen, das nachfolgend bezugnehmend auf Fig. 2 noch detaillierter erläutert wird.

Die Einrichtung 11 von Fig. 1 ist über eine Paketleitung 17 mit der Einrichtung 15 zum Ausgeben gekoppelt, um ein normales, also nicht fehlerhaftes, rechtzeitig empfangenes Paket zur Einrichtung 15 zu übertragen. Darüber hinaus ist die Einrichtung 14 zum Liefern eines Ersatzpakets mit der Einrichtung 15 zum Ausgeben über eine Ersatzpaketleitung 18 verbunden. Vorzugsweise umfasst die Einrichtung 14 zum Liefern eines Ersatzpakets einen Speicher, in dem ein Ersatzpaket gespeichert ist. Immer dann, wenn ein fehlendes oder fehlerhaftes Paket erkannt worden ist, aktiviert die Einrichtung 14 einen Speicherzugriff, um aus dem Speicher das Ersatzpaket wiederzugewinnen und über die Leitung 18 der Einrichtung 15 zum Ausgeben zuzuführen.

Die Einrichtung 13 zum Detektieren wird bei einem Ausführungsbeispiel dahingehend gesteuert, dass sie dann, wenn ein Paket in einer Folge von Paketen länger als eine maximale Verzögerung nicht empfangen worden ist, einen Paketverlust detektiert und die Einrichtung zum Liefern eines Ersatzpakets aktiviert. Diese maximale Verzögerung beispielsweise ist bei einem Ausführungsbeispiel über eine Steuerleitung 19 steuerbar. Über die Steuerleitung 19 kann der Einrichtung 13 zum Detektieren eine QoS-Anforderung (QoS = Quality of Service) zugeführt werden, die beispielsweise bei einer VolP-Anwendung eine maximale Verzögerung umfasst. Für andere paketorientierte Anwendungen außer VolP könnten andere QoS-Anforderungen existieren, die über die Steuerleitung 19 der Einrichtung 13 zum Detektieren zugeführt werden. Alternativ kann die Einrichtung 13 zum Detektieren jedoch auch ein fest eingestelltes Kriterium haben, von dem abhängig ein Paketfehler oder ein Paketverlust detektiert wird und damit die Einrichtung 14 zum Liefern des Ersatzpakets aktiviert wird.

Bei einem Ausführungsbeispiel hat das Ersatzpaket, das über die Ersatzpaketleitung 18 zur Einrichtung 15 zum Ausgeben geliefert wird, nicht nur eine vorbestimmte Inhalts-Eigenschaft, sondern auch einen Hinweis darauf, dass das Paket ein Ersatzpaket ist. Der Hinweis ist bei einem Ausführungsbeispiel derart, dass ein Basis-Decodierer, der das Ersatzpaket empfängt, den Hinweis ignoriert und das Paket wie ein gültiges Paket gemäß der vorbestimmten Inhalts-Eigenschaft decodiert, und dass ein Erweiterungsdecodierer, der im Vergleich zum Basis-Decodierer eine erweiterte Funktionalität hat, den Hinweis interpretiert, um eine Fehlerverschleierungsmaßnahme durchzuführen, die darin besteht, für das Ersatzpaket einen Inhalt zu erzeugen, der sich von der vorbestimmten Inhalts-Eigenschaft unterscheidet.

Fig. 2 zeigt einen Decodierer zum Decodieren einer Folge von Paketen, der beispielsweise in einem Mobilteil 20 angeordnet sein kann. Der Decodierer umfasst einen Empfänger 21 zum Empfangen der Folge von Paketen, für die eine Paket-Syntax vorgeschrieben ist, wobei die Folge wenigstens ein Datenpaket und wenigstens ein Ersatzpaket aufweist, wobei das Ersatzpaket im Hinblick auf die Paket-Syntax ein gültiges Paket ist, und wobei ein Audioinhalt des Ersatzpakets eine vorbestimmte Inhalts-Eigenschaft hat. Ferner umfasst das Ersatzpaket den Hinweis darauf, dass es ein Ersatzpaket ist. Dieser Hinweis kann jedoch nur von dem Erweiterungs-Decodierer, der in Fig. 2 dargestellt ist, interpretiert werden, während von einem Basis-Decodierer dieser Hinweis nicht interpretiert werden kann.

Die Interpretation des Hinweises auf ein Ersatzpaket wird von einem Detektor 22 geleistet, der ausgebildet ist, um zu Detektieren, ob ein Paket den Hinweis enthält und somit ein Ersatzpaket ist. Der Erweiterungs-Decodierer in Fig. 2 umfasst ferner eine Fehlerverschleierungseinrichtung 23 zum Synthetisieren eines Synthese-Audio-Inhalts, der eine Inhalts-Eigenschaft hat, die sich von der vorbestimmten Inhalts-Eigenschaft, die in dem Ersatzpaket enthalten ist, unterscheidet. Ferner umfasst der Erweiterungs-Decodierer eine Audioaufbereitungseinrichtung 24 zum Aufbereiten des Audioinhalts eines Pakets, wenn das Paket kein Ersatzpaket ist, und zum Aufbereiten des Synthese-Audioinhalts, wenn das Paket ein Ersatzpaket ist. Die Audio-Aufbereitungseinrichtung 24 ist mit einer Ausgabeeinheit 25 gekoppelt, die z.B. einen D/A-Wandler, einen Verstärker und einen Lautsprecher umfassen kann.

Insbesondere ist die Audio-Aufbereitungseinrichtung mit dem Empfänger 21 über eine Paketleitung 26 gekoppelt, über die ein reguläres Paket übertragen wird. Ferner ist die Audio-Aufbereitungseinrichtung 24 mit der Fehlerverschleierungseinrichtung 23 über eine Ersatzpaketleitung 27 verbunden, über die ein Synthese-Audio-Inhalt von der Fehlerverschleierungseinrichtung 23 zur Audio-Aufbereitungseinrichtung 24 übertragen wird.

Die Fehlerverschleierungseinrichtung 23 kann eine Fehlerverschleierung auf verschiedene Arten und Weisen durchführen. Eine einfache Fehlerverschleierungseinrichtung besteht darin, den vorherigen Frame bzw. den Audioinhalt des vorherigen Pakets oder den Audioinhalt des nachfolgenden Pakets einfach zu wiederholen. Diese Fehlerverschleierungsmaßnahme wird als "frame-repetition" bezeichnet. Alternativ kann die Fehler-verschleierungseinrichtung ausgebildet sein, um eine Extrapolation oder eine Interpolation durchzuführen. Diese Extrapolation oder Interpolation kann spektralwertweise oder bandweise erfolgen. Im Falle einer spektralwertweisen Extrapolation kann ein Spektralwert für einen Ersatz-Frame auf der Basis von einem oder von mehreren Spektralwerten gleicher Frequenz von früheren Frames erfolgen. Alternativ kann auch eine bandweise Fehlerverschleierung durchgeführt werden dahin gehend, dass die Spektralwerte in einem Band z.B. durch einen Puffer als Zufallszahlengenerator erzeugt werden oder mehr oder weniger determiniert erzeugt werden, und dass die Spektralwerte dann so gewichtet werden, dass die Energie, die sie repräsentieren, gleich einer Zielenergie ist, wobei diese Zielenergie von einem oder mehreren vorhergehenden Frames und/oder einem oder mehreren nachfolgenden Frames abgeleitet worden ist. Die vorhergehenden und/oder nachfolgenden Frames können gültige empfangene Pakete sein oder können Pakete bzw. Frames sein, die bereits von einer Fehlerverschleierungseinrichtung erzeugt worden sind, wenn ein Paketverlust stattgefunden hat, bei dem nicht nur ein einziges Paket untergegangen ist, sondern bei dem mehrere aufeinanderfolgende Pakete untergegangen sind.

Bei einem Ausführungsbeispiel der vorliegenden Erfindung ist der Audiocodierer, der die Folge von Paketen erzeugt, ein Transformations-basierter Audiocodierer. Ein solcher Transformations-basierter Audiocodierer hat eine Zeit-Frequenz-Umsetzungsstufe 30, über die ein zeitliches Audiosignal in eine Folge von Kurzzeitspektren umgesetzt wird. Jedes Kurzzeitspektrum wird einem Quantisierer 31 zugeführt, der eine Quantisierung durchführt, welche von einem psychoakustischen Modell 32 gesteuert wird, derart, dass eine Quantisierung so vorgenommen wird, dass ein Quantisierungsrauschen den subjektiven Audioeindruck nicht stört. Dem Quantisierer nachgeschaltet ist ein Entropie-Codierer 33, der beispielsweise ein Huffman-Codierer sein kann. Der Entropie-Codierer liefert eine Folge von Bits, die zusammen mit Seiteninformationen, welche von Quantisierer 31 beispielsweise in Form der Skalenfaktoren geliefert werden und welche vom Entropie-Codierer 33 beispielsweise in Form der verwendeten Codiertabelle geliefert werden, Daten, die einem Paketpacker 34 zugeführt werden, der ausgangsseitig die Folge von Datenpaketen ausgibt. Abgesehen vom Paketpacker 34 stellt der in Fig. 2 gezeigte Audio-Encodierer einen typischen Transformations-basierten Encodierer dar, wie er beispielsweise unter dem Stichwort MP3 (MPEG-1 Layer 3) oder AAC (MPEG-4) oder AC-3 etc. bekannt ist. Es sei darauf hingewiesen, dass der Paketpacker 34 je nach Anforderung ausgebildet ist, um pro Audio-Frame also pro Kurzzeitspektrum ein Paket zu erzeugen, oder um mehr als einen Audio-Frame, also mehrere codierte Kurzzeitspektren in ein einziges Paket zu bringen.

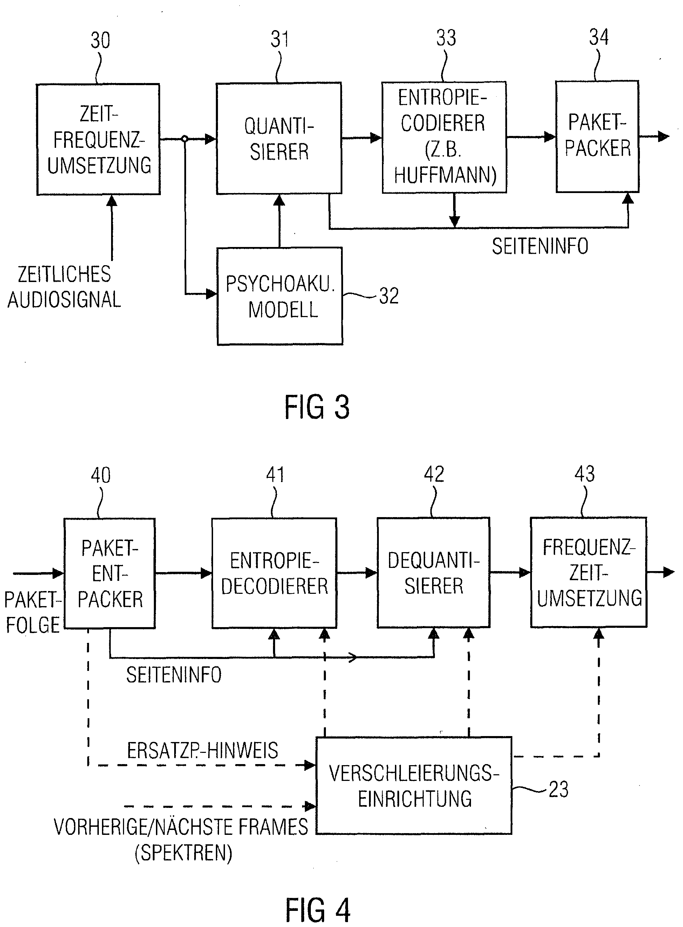

Fig. 4 zeigt eine detailliertere Darstellung der Audio-Aufbereitungseinrichtung 24 von Fig. 2 und insbesondere die Kooperation der Audio-Aufbereitungseinrichtung 24 mit der Fehlerverschleierungseinrichtung 23. Eingangsseitig umfasst die Audio-Aufbereitungseinrichtung einen Paketentpacker 40, der ein Paket entpackt, um die Seiteninformationen von den "Hauptinformationen" zu trennen.

Die Hauptinformationen, also die durch eine Folge von Bits dargestellten Kurzzeitspektren werden einem Entropie-Decodierer 41 zugeführt, welcher Quantisierungsindizes liefert, die einem Dequantisierer 42 zugeführt werden, der an seinem Ausgang quantisierte und wieder dequantisierte Spektralwerte liefert, die dann, nach einer Frequenz-Zeitumsetzung in einem Block 43, dazu verwendet werden, um das Ausgangsaudiosignal zu erzeugen. Sowohl der Entropie-Decodierer 41 als auch der Dequantisierer 42 können von den Seiteninformationen gesteuert werden, wobei der Entropie-Decodierer typischerweise einen Codetabellenindex erhält, während der Dequantisierer 42 Skalenfaktoren erhält, um eine korrekte Dequantisierung durchzuführen.

Der Paketentpacker 40 ist dann, wenn er eine Detektionseigenschaft hat, wie sie im Detektor 22 von Fig. 2 vorhanden ist, in der Lage, der Verschleierungseinrichtung 22 einen Ersatzpaket-Hinweis zu schicken, derart, dass die Verschleierungseinrichtung 23 erkennt, dass das gerade aktuelle Paket kein vom Codierer von Fig. 3 erzeugtes Paket, sondern ein von der Basisstation erzeugtes Ersatzpaket ist. In diesem Fall wird die Verschleierungseinrichtung entweder dem Entropie-Decodierer eine Folge von Bits liefern oder wird dem Dequantisierer eine Folge von Quantisierungsindizes liefern oder wird der Frequenz-Zeit-Umsetzungseinrichtung eine Folge von Spektralwerten liefern, um an irgendeiner Stelle in der Decodierer-Funktionskette den Synthese-Audioinhalt einzuspeisen. Es wird, bevorzugt am Ende der Kette, also bei der Frequenz-Zeit-Umsetzungsstufe 43 ein synthetisierter spektraler Audioinhalt eingespeist.

Dieser spektrale Inhalt hängt vorzugsweise von den bereits korrekt empfangenen vorherigen Spektren oder von den bereits vielleicht sogar schon vorliegenden nächsten Spektren ab und kann eine spektralwertweise, eine bandweise oder eine gemischte, also spektralwertweise und bandweise Fehlerverschleierungsmaßnahme umfassen, um den Audioinhalt zu synthetisieren.

Wie es bereits anhand der Fig. 1 und 2 dargestellt worden ist, wird eine Implementierung der Erfindung im Rahmen einer Basisstation und eines Mobilteils eingesetzt, wobei davon ausgegangen wird, dass die Basisstation Pakete in einer nicht korrekten Reihenfolge empfangen kann, wie beispielsweise dann, wenn die Basisstation mit dem Internet gekoppelt ist, während das Mobilteil darauf angewiesen ist, eine Folge von Paketen in der korrekten Reihenfolge zu erhalten. Eine solche Kommunikationsverbindung zwischen einer Basisstation und einem Mobilteil wird z.B. durch den DECT-Standard definiert.

Im Rahmen der Echtzeit-Kommunikation über paketorientierte Netzwerke (z.B. VoIP) kann dabei nicht sichergestellt werden, dass alle Pakete in der erforderlichen Zeit beim Empfänger eintreffen. Nach einer bestimmten (sehr begrenzten) Zeit müssen daher noch nicht eingetroffene Pakete als verloren eingestuft werden. Im Falle eines IP-Paketverlusts wird von der Basisstation ein Ersatz-Audio-Frame erzeugt und gesendet.

Eine solche Ersetzung wird die Basisstation eines Next-Generation (NG) DECT-Systems vornehmen. Statt der originalen (aber nicht empfangenen) Frames werden dann die ersetzten Frames von der Basisstation zum Mobilteil übertragen. Die NG DECT-Spezifikation stellt eine Erweiterung der bisherigen DECT-Spezifikation u.a. um Wide-Band- und Super-Wide-Band-Audio-Codecs und einen IP-Anschluss dar.

Eine NG-DECT-Station besteht aus einem oder mehreren drahtlosen Telefonen, die Gespräche von einer NG DECT-Basisstation empfangen. Damit wird es möglich, über NG-DECT-Telefone direkt VolP-Gespräche zu führen. Im Idealfall können die VolP-Sprachpakete ohne Neucodierung in der Basisstation von der Basisstation zum Mobilteil übertragen werden.

Beispielsweise dann, wenn Audio-Codecs verwendet werden, die in ihrer regulären Syntax keine spezielle Möglichkeit der Signalisierung eines Frame-Verlustes bieten, wird die Erzeugung von Ersatz-Paketen eingesetzt. Ein solcher Ersatz-Audio-Frame sollte von einem standard-konformen Decodierer decodierbar sein, sollte aber gleichzeitig bei einer Ausführungsform einem erweiterten Decodierer die Möglichkeit geben, zweifelsfrei zu erkennen, dass es sich bei diesem Frame um einen Ersatz-Frame handelt, so dass dieser erweiterte Decodierer entsprechende Gegenmaßnahmen, wie beispielsweise eine Fehlerverschleierung aktivieren kann. Das Einfügen eines Ersatz-Frames sollte ferner ohne größeren Rechenaufwand und insbesondere ohne spezielle Auswertung der vorangegangenen Audiodaten von einer Basisstation zu schaffen sein, derart, dass eine Basisstation als reine Relay-Station wirken kann, also als eine Station, die ohne Decodieren und wieder Encodieren eine Datenübertragung schafft. Eine Basisstation sollte daher, wenn überhaupt, lediglich eine ganz geringe Paketentpackung vornehmen, die beispielsweise nur dahin gehend durchgeführt wird, dass eine Paketsequenzinformation wiedergewonnen wird, die darauf hinweist, wo in der Sequenz ein Datenpaket angeordnet sein muss, damit eine korrekte Decodierung des Audioinhalts, der durch die Sequenz von Datenpaketen repräsentiert ist, erfolgen kann.

Bei einer Ausführungsform werden spezielle Benutzer-spezifische Datenbereiche von Transformations-basierten Codierern verwendet, um für einen Decodierer mit erweiterter Funktionalität, also für einen Erweiterungs-Decodierer eine Signalisierung zu schaffen, dass es sich bei dem entsprechenden Frame um einen Ersatz-Frame handelt, obgleich der zugrunde liegende Bitstrom-Syntax-Standard eine solche Signalisierung nicht vorgesehen hatte.

Wenn ein Frame oder ein Paket einen Header und einen Payload-Abschnitt trägt, wobei der Payload-Abschnitt die Nutzdaten enthält, so wird es bevorzugt, den Hinweis in den Payload-Daten unterzubringen, da dann bei einer nachfolgenden Audioverarbeitung, in der der Header ohnehin nicht berücksichtigt wird, der Hinweis wegfallen würde und damit keine Fehlerverschleierung mehr möglich wäre.

Wenn ein Paket nur einen Payload-Abschnitt hat und keinen Header hat, ermöglicht die Unterbringung des Hinweises im Payload-Abschnitt erst die Implementierung des Ausführungsbeispiels. Der Hinweis wird vorzugsweise also in den Audiodaten bzw. in dem Audiodatenabschnitt untergebracht.

Bei einer Implementierung erfüllt der Ersatz-Audio-Frame bzw. das Ersatzpaket in dem Fall, dass keine explizite Signalisierungsmöglichkeit eines Frame-Verlusts vorgesehen ist, ein erstes Kriterium, das dahin gehend lautet, dass der Ersatz-Frame bzw. das Ersatzpaket von einem Standard-konformen Decodierer decodierbar ist. Das zweite Kriterium besteht darin, dass der Ersatz-Frame einem erweiterten Decodierer die Möglichkeit geben soll, zweifelsfrei zu erkennen, dass es sich bei diesem Frame um einen Ersatz-Frame handelt, so dass dieser erweiterte Decodierer eine Fehlerverschleierung aktivieren kann.

Ein gewöhnlicher Standard-konformer Decodierer wird den Ersatz-Frame decodieren können, wenn der Ersatz-Frame ein gültiger Frame gemäß der vorbestimmten standardisierten Datenstrom-Syntax bzw. Paket-Syntax oder Frame-Syntax ist. So wird bei einer Implementierung bevorzugt, den fehlenden Frame durch einen Frame ohne Audio-Inhalt zu ersetzen, also ein sogenanntes Muting durchzuführen. Muting bedeutet, dass das gesamte Spektrum zu Null gesetzt wird. Insbesondere am Beispiel des AAC-Standards (MPEG-4-Audio) wird zum Erzeugen des Nullspektrums die Variante bevorzugt, dass das höchste Skalenfaktorband, für das Spektralwerte übertragen werden, zu Null gesetzt wird (max_sfb=0). Alternativ können auch Spektralwerte für Skalenfaktorbänder übertragen werden, die dann wieder Null sind. Dies kann prinzipiell mit jedem verfügbaren Huffman-Codebuch der verschiedenen vorgesehenen Codebücher realisiert werden, wobei bei der Verwendung des Codebuchs "ZERO_HCB" (Null-Huffman-Codetabelle) diese Spektrallinien nicht explizit zu übertragen sind.

Es sei darauf hingewiesen, dass die Basisstation, die den fehlerhaften oder nicht vorhandenen Frame detektieren soll, bereits eine Fehlerverschleierungsmaßnahme durchführen könnte. Gemäß der Erfindung wird es jedoch bevorzugt, dass die Basisstation eine solche Fehlerverschleierungsmaßnahme nicht durchführt, da die Fehlerverschleierungsmaßnahme rechenintensiv ist und überdies eine Auswertung des vorangegangenen und gegebenenfalls zukünftigen Audiosignals erfordert. Insbesondere dann, wenn eine DECT-Basisstation mehrere Mobilteile "bedient" würde dies dazu führen, dass eine Basisstation, um eine komplette Fehlerverschleierung durchführen zu können, bereits sämtliche Audioinhalte durchgehend decodiert und wieder encodiert. Abgesehen von der damit verbundenen Notwendigkeit nach hohen Prozessor- und Speicherressourcen würde auch, insbesondere dann, wenn ein verlustbehafteter Codierer (lossy coder) zum Einsatz kommt, die Gefahr einer zusätzlichen Qualitätsverschlechterung aufgrund der Tandem-Codiereffekte resultieren. Ausserdem würde das Delay stark ansteigen.

Nachdem im AAC-Standard keine explizite Möglichkeit der Signalisierung eines Frame-Verlusts vorgesehen ist, wird bei einer Implementierung eine Möglichkeit der Signalisierung verwendet, die von einem regulären Decodierer ignoriert wird. Hierzu wird die Daten-Syntax bzw. Paket-Syntax eingehalten. Andererseits genügt eine einfache Zu-Null-Setzung des Spektrums eines Frames noch nicht, um ein sicheres Indiz dafür zu liefern, dass es sich hier um einen Ersatz-Frame bzw. ein Ersatz-Paket handelt, da auch solche Frames im regulären Betrieb vorkommen können, wenn z.B. am Codierer-Eingang kein Signal anliegt.

Der Hinweis darauf, dass es sich bei einem Frame um einen Ersatz-Frame bzw. um ein Ersatz-Paket handelt, liefert einem Erweiterungs-Decodierer die Information, dass es sich hier gerade nicht um einen Frame handelt, bei dem das Spektrum tatsächlich zu Null ist, sondern dass es sich bei dem Frame um einen Frame handelt, der aufgrund von Übertragungsfehlern in einer Basisstation eingeführt worden ist, um einen Decodierer-Ausfall bzw. einen Ausfall der Sprachverbindung zu vermeiden.

Audio-Codier-Standards sehen typischerweise Benutzer-spezifische Datenbereiche vor, die eine zusätzliche Payload-Übertragung ermöglichen können, wobei diese Payload jedoch von üblichen Decodierern, also Basis-Decodierern ohne erweiterte Funktionalität ignoriert wird. Im AAC-Standard ist eine solche Benutzer-definierte Payload die sogenannte "extension_payload", wie es in Anhang 1 definiert ist. Je nach Wert der Variable "extension_type" wird, wie es in Anhang 2 gezeigt ist, im Standard ein anderer Zweck vorgesehen. Die Anhänge 1 und 2 sind Auszüge aus dem Standard ISO/IEC14496-3:2005(E). Die dort beschriebene Verwendung des Füll-Elements (FILL) wird im Standard zu folgendem Zweck vorgesehen. Füllelemente müssen dem Bitstrom hinzugefügt werden, wenn die Gesamtanzahl von Bits für alle Audiodaten zusammen mit allen Zusatzdaten niedriger als die minimal erlaubte Anzahl von Bits in diesem Frame ist, um die Ziel-Bitrate zu erreichen. Dynamic-Range-Control-Bits (DRC-Bits) werden hinzugefügt, wenn der Codierer solche DRC-Informationen einfügen möchte. Unter normalen Bedingungen werden, wie es im Standard heißt, Füllbits vermieden, und es werden die freien Bits dazu verwendet, um das Bit-Reservoir bzw. die Bitsparkasse aufzufüllen. Nur wenn das Bitreservoir voll ist, werden Füllbits geschrieben. Eine beliebige Anzahl von Füllelementen ist erlaubt.

Bei einer Implementierung der Erfindung wird, wie es in Anhang 3 bei 70 gezeigt ist, der "extension-type" auf "0000" gesetzt, um - im Gegensatz zur standardgemäßen Verwendung von Füllbits - nunmehr den Hinweis auf einen Frameverlust zu schreiben, und zwar im Feld "other-bits".

So wird also der im Standard für Füll-Bits vorgesehene Benutzer-spezifische Datenbereich eingesetzt, um eine Signalisierung des Ersatz-Rahmens zu schaffen, also um dort den Hinweis auf einen Ersatz-Rahmen unterzubringen. Je nach Implementierung können jedoch auch andere "extension_payload ()" verwendet werden, je nach einer anderen Einstellung des Value von "extension_type". Da vorzugsweise ein Nullspektrum effizient übertragen wird, (indem max_sfb gleich Null gesetzt wird) oder ein Null-Huffman-Codebuch verwendet wird, stehen ausreichend Bits für diverse extension_payloads () zur Verfügung.

Es sei darauf hingewiesen, dass bei 71 eine typische MPEG-4-konforme Datenstrom- bzw. Paket-Syntax bzw. Frame-Syntax für ein Ersatz-Paket gezeigt ist, wobei, wie es bei 72 dargestellt ist, die Variante mit "max_sfb=0" verwendet wird. Vorzugsweise werden auch alle anderen Daten, die erforderlich sind, um eine gültige Paket-Syntax zu erhalten, ebenfalls auf Null gesetzt. Es sei jedoch darauf hingewiesen, dass diese Daten allein noch kein sicherer Hinweis für einen Ersatzrahmen sind. Erst die extension_payload 70 führt zu einem sicheren Indiz, da ein normaler Encodierer einen solchen Rahmen mit einem Null-Spektrum, jedoch einer speziellen extension_payload nicht schreiben würde.

Anhang 4 zeigt einen beispielhaften Ersatz-Frame für New-Generation-DECT für eine Abtastrate von 48 kHz, ein Monosignal und eine Bitrate von 64 kBit/s. Es sei darauf hingewiesen, dass die extension_payload, wie sie bei 70 in Anhang 3 gezeigt ist, in Anhang 4 nicht ohne weiteres ersichtlich ist, da die extension_payload nicht "byte aligned" in dem Bitstrom vorliegt.

Ferner sei darauf hingewiesen, dass die Bitkombination in der "extension_payload" ein Bitmuster, das auch als "error pattern" bezeichnet wird, aufweist, das dem ASCII-Code für "FRAME_LOSS" entspricht. Damit wird sichergestellt, dass kein Konflikt mit anderen Benutzern der extension_payload erzeugt wird, da es höchst unwahrscheinlich ist, dass ein anderer Benutzer den ASCII-Code für "FRAME_LOSS" verwenden würde, um etwas zu signalisieren, was nichts mit "FRAME_LOSS" zu tun hat.

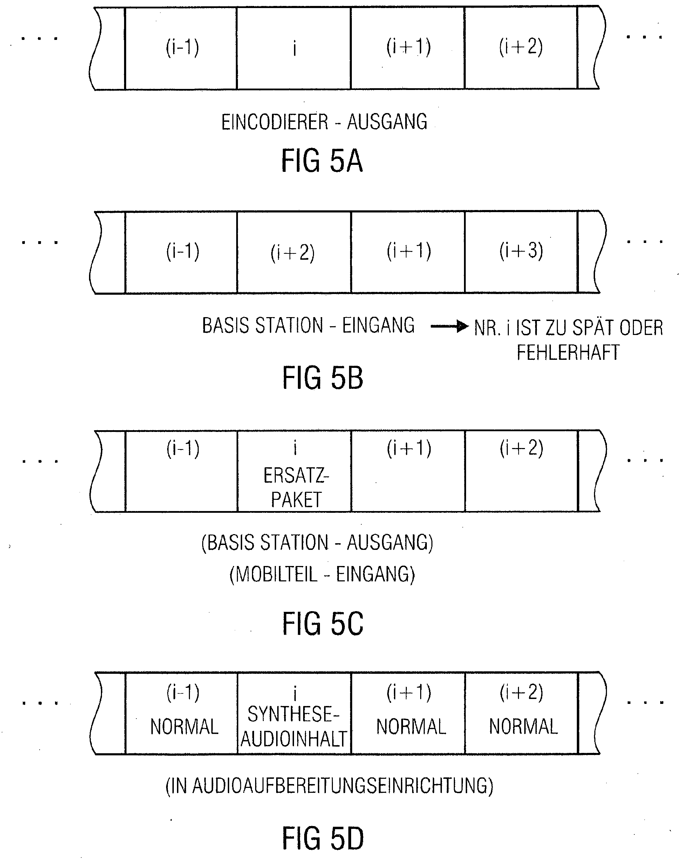

Nachfolgend wird Bezug nehmend auf Fig. 5 auf verschiedene Reihenfolgen von Paketen oder Frames eingegangen, wie sie an verschiedenen Punkten im Übertragungsszenario von einem Sender der Pakete bis zu einem Decodierer bzw. bis zur Audio-aufbereitungseinrichtung in dem Decodierer auftreten können.

Fig. 5A zeigt eine Sequenz von Paketen mit der Nummer (i-1), i, (i+1), (i+2). Eine solche korrekte Sequenz von Paketen oder Frames liegt am Eingang in ein paketorientiertes Übertragungsnetz, wie beispielsweise das Internet, vor.

Fig. 5B zeigt eine Sequenz von Paketen am Eingang in die Basisstation, wobei zu sehen ist, dass das Paket i in dem Zeitausschnitt, der von Fig. 5B beleuchtet wird, noch nicht angekommen ist, dass jedoch die Reihenfolge durcheinander gewürfelt ist. Dies liegt daran, dass das Paket i entweder komplett untergegangen ist oder einen sehr langen Weg vom Sender zum Empfänger erhalten hat. Andererseits hat das Paket (i+2) einen sehr günstigen Weg erhalten, so dass dieses Paket das Paket (i+1) auf dem Weg vom Sender, also vom Encodierer, zum Basisstations-Eingang "überholt" hat.

Die Einrichtung 11 zum Empfangen in Fig. 1 wird daher die Pakete, wie sie in Fig. 5B angekommen sind, wieder in die richtige Reihenfolge sortieren. Ferner wird die Einrichtung 13 zum Decodieren feststellen, dass das Paket mit der Nummer i nicht vorhanden ist oder fehlerhaft ist. Aus diesem Grund wird für die Nummer i ein Ersatzpaket erzeugt, wie es in Fig. 5C ersichtlich sind. Fig. 5C zeigt daher die Sequenz von Paketen, wie sie von der Einrichtung 15 zum Ausgeben in Fig. 1 ausgegeben wird. Auf dem Weg von der Basisstation gemäß Fig. 1 zum Mobilteil gemäß Fig. 2 ändert sich die Reihenfolge der Pakete nicht mehr. Allerdings wird der Erweiterungs-Decodierer, wie er in Fig. 2 dargestellt ist, erkennen, dass das Paket mit der Nummer i ein Ersatzpaket ist. Daher wird im Gegensatz zu den anderen Paketen, die in Fig. 5D gezeigt sind, für die eine normale Aufbereitung des Audio-Inhalts stattfindet, für das Ersatzpaket ein Synthese-Audio-Inhalt erzeugt, der auf eine Fehlerverschleierungsmaßnahme zurückgeht.

Abhängig von den Gegebenheiten können die erfindungsgemäßen Verfahren in Hardware oder in Software implementiert werden. Die Implementierung kann auf einem digitalen Speichermedium, insbesondere einer Diskette oder CD, mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computer-Programm-Produkt mit einem auf einem maschinenlesbaren Träger gespeicherten Programmcode zur Durchführung des Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

Gemäß einem Ausführungsbeispiel der Vorrichtung zum Senden einer Folge von Datenpaketen weist die Einrichtung 14 zum Liefern folgende Merkmale auf: einen Speicher zum Speichern des Ersatzpakets; einen Speicherholer zum Holen des Ersatzpakets aus dem Speicher immer dann, wenn die Einrichtung 13 zum Detektieren ein fehlerhaftes Paket oder ein fehlendes Paket detektiert.

Bei einem bevorzugten Ausführungsbeispiel der Vorrichtung zum Senden einer Folge von Datenpaketen, ist die Einrichtung 11 zum Empfangen eine Eingangsschnittstelle einer Telefon-Basisstation und ist mit einem Netzwerk verbindbar, das für eine Paketbasierte Datenübertragung ausgebildet ist.

Bei einem bevorzugten Ausführungsbeispiel der Vorrichtung zum Senden einer Folge von Datenpaketen, hat das Ersatzpaket einen Payloadbereich, in dem der Hinweis angeordnet ist.

Bei einem bevorzugten Ausführungsbeispiel der Vorrichtung zum Senden einer Folge von Datenpaketen, sind die Daten gemäß einem Buchstaben-Code erzeugt, wobei die Daten eine Bedeutung haben, die auf einen Datenverlust hinweist.

Bei einem bevorzugten Ausführungsbeispiel der Vorrichtung zum Senden einer Folge von Datenpaketen, stellen die Daten den Ausdruck "FRAME_LOSS" oder "Datenverlust" dar.

Bei einem bevorzugten Ausführungsbeispiel der Vorrichtung zum Senden einer Folge von Datenpaketen, ist der Buchstaben-Code der ASCII-Code.

Bei einem bevorzugten Ausführungsbeispiel der Vorrichtung zum Senden einer Folge von Datenpaketen, ist die Folge von Paketen von einem Audiocodierer gemäß MPEG-1 Layer 3 oder MPEG-4 AAC erzeugt, wobei eine Bit-Sparkassenfunktion deaktiviert ist.

Bei einem bevorzugten Ausführungsbeispiel der Vorrichtung zum Senden einer Folge von Datenpaketen, ist diese als Basisstation ausgebildet.

Bei einem bevorzugten Ausführungsbeispiel der Vorrichtung zum Senden einer Folge von Datenpaketen, weist die Paket-Syntax ein Fülldatenfeld auf, das von einem Basis-Encodierer gefüllt wird, wenn eine minimale für den Frame vorgesehene Anzahl von Bytes nicht zum Codieren eines Abschnitts des Audiosignals benötigt wird, und bei der der Hinweis durch eine vorbestimmte Bit-Kombination in dem Fülldatenfeld dargestellt ist.

Bei einem bevorzugten Ausführungsbeispiel der Vorrichtung zum Senden einer Folge von Datenpaketen, ist die vorbestimmte Zeitdauer einstellbar und durch eine QoS-Anforderung 19 vorgebbar.

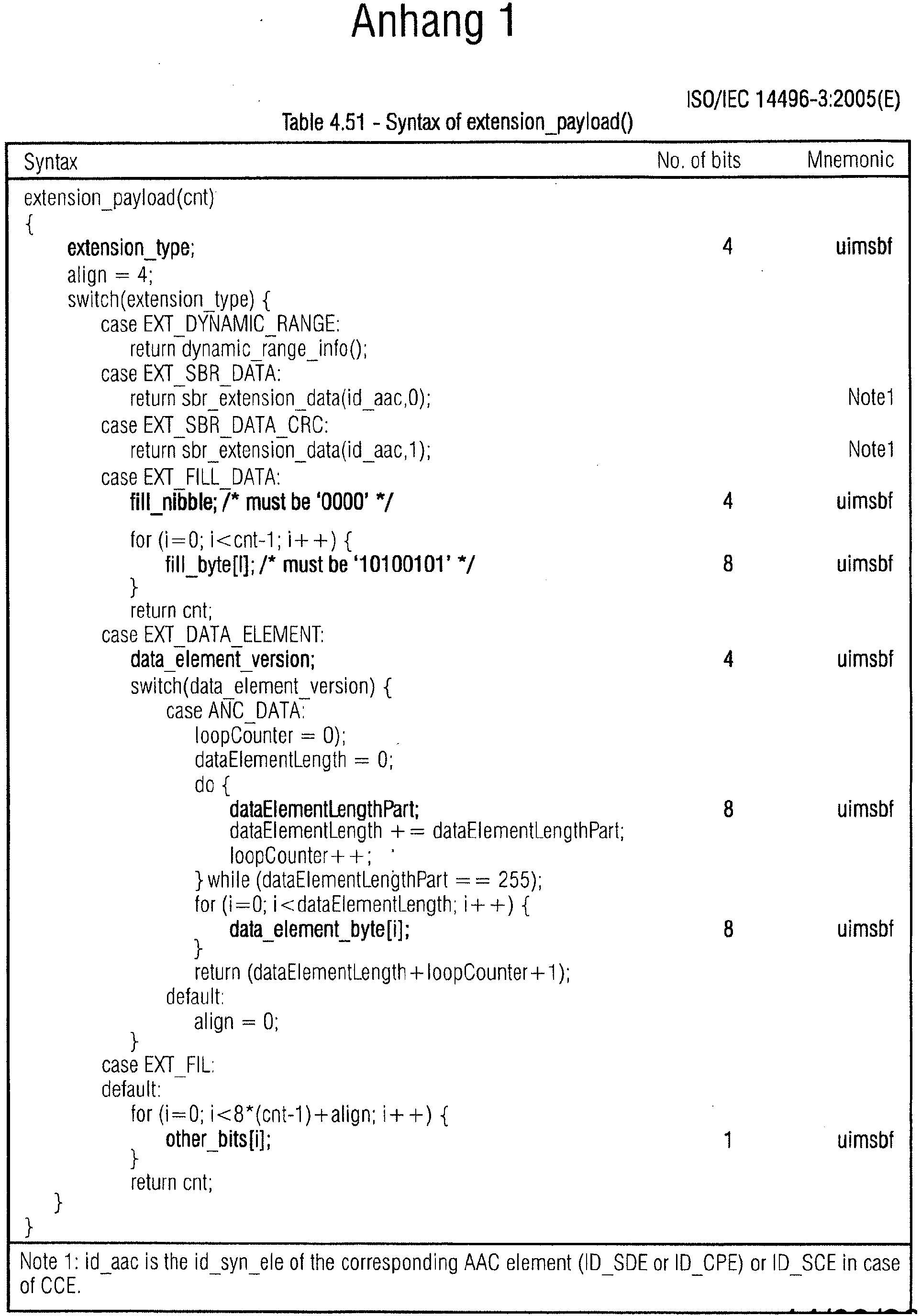

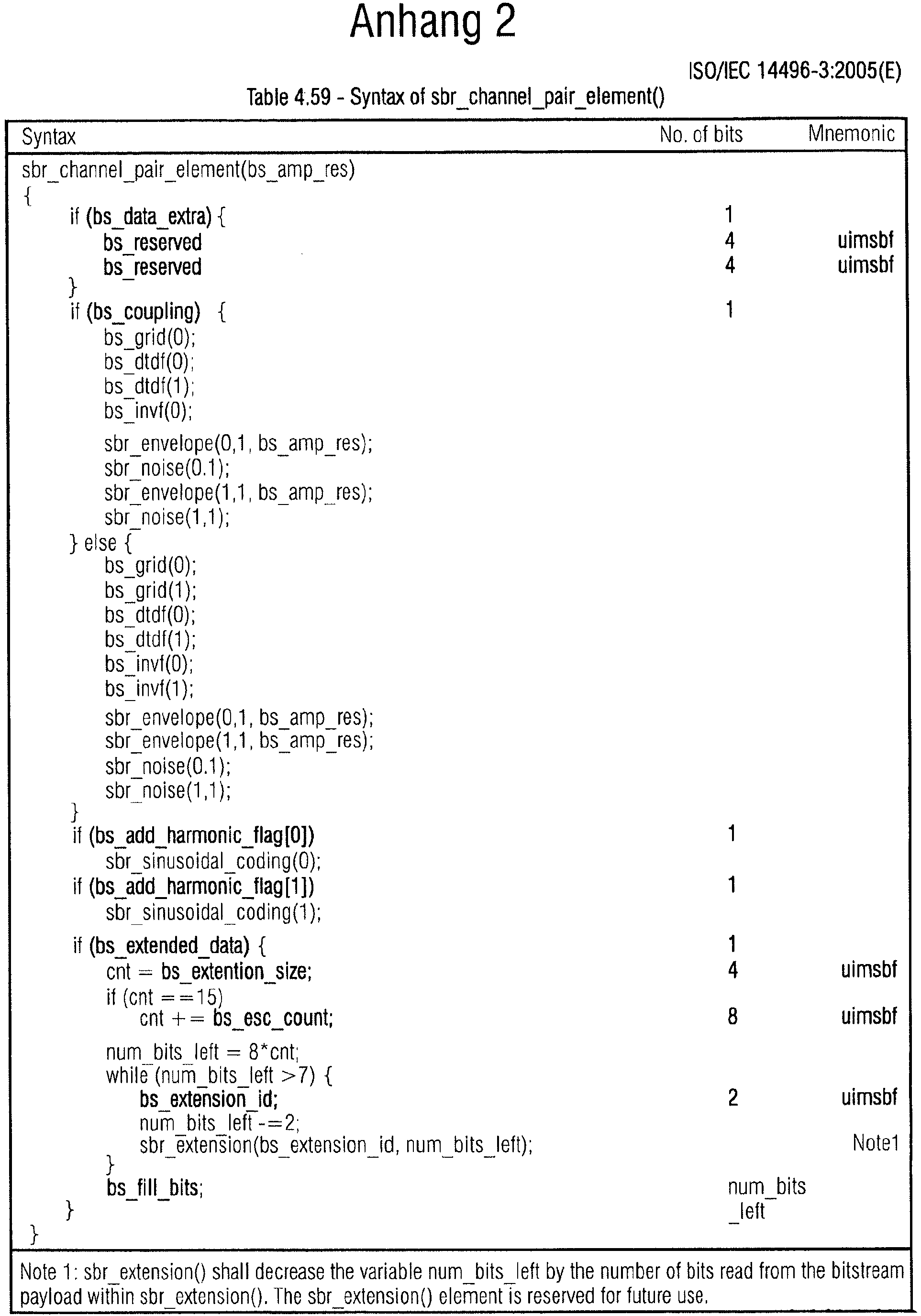

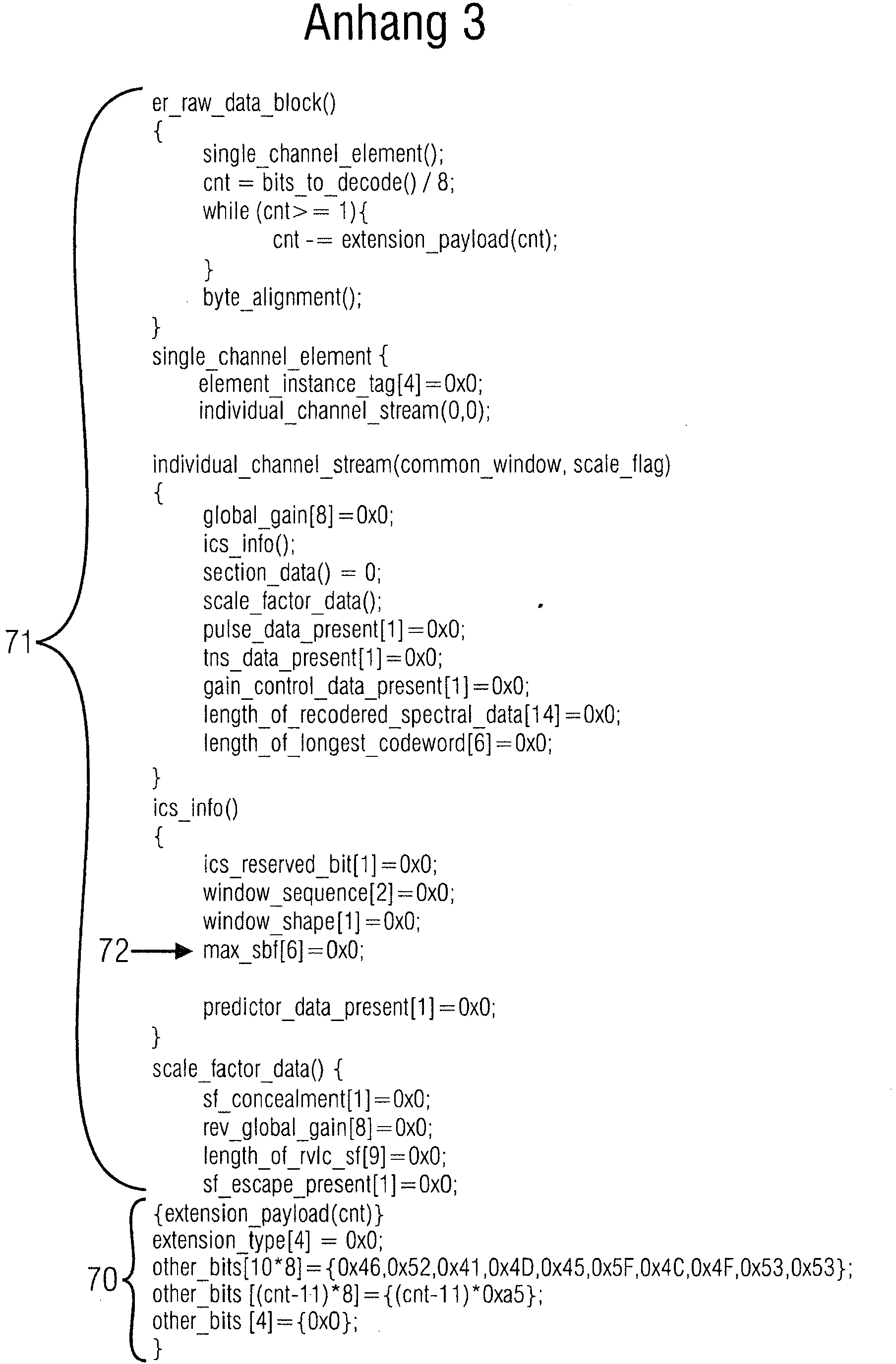

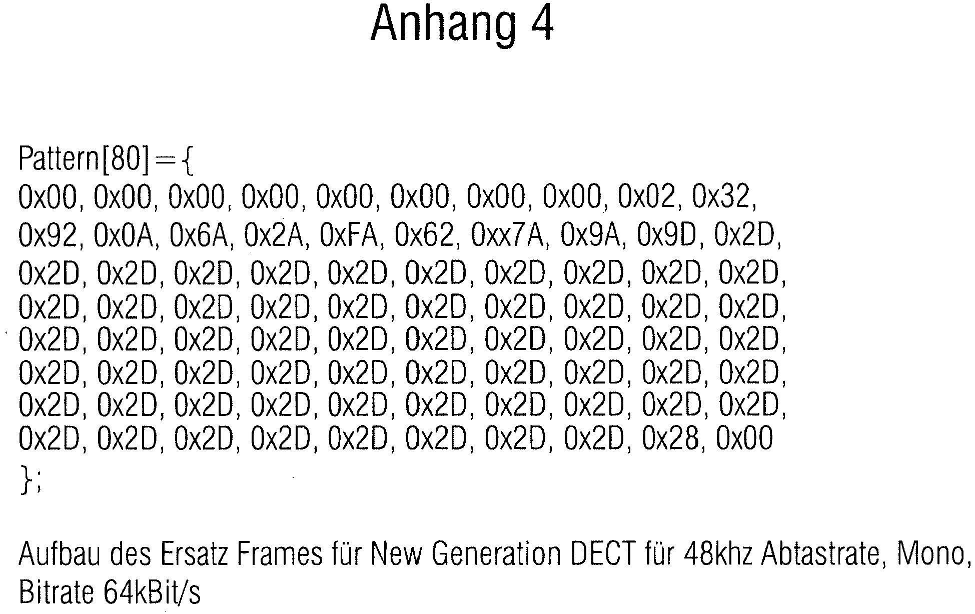

## Patentansprüche

1. Erweiterungs-Decodierer zum Decodieren einer Folge von Paketen, wobei der Erweiterungs-Decodierer im Vergleich zu einem Basis-Decodierer eine erweiterte Funktionalität hat, mit folgenden Merkmalen:
einem Empfänger (21) zum Empfangen der Folge von Paketen, für die eine Paket-Syntax vorgegeben ist,
wobei die Folge von Paketen wenigstens ein Datenpaket und wenigstens ein Ersatzpaket aufweist, wobei das Ersatzpaket im Hinblick auf die Paket-Syntax ein gültiges Paket ist,
wobei ein Audioinhalt des Ersatzpakets ein vorbestimmter durch den Basis-Decodierer wiedergebbarer gültiger Audioinhalt ist und eine vorbestimmte Inhalts-Eigenschaft hat, und
wobei das Ersatzpaket einen Hinweis darauf enthält, dass es ein Ersatzpaket ist, wobei der Hinweis derart ist, dass das Ersatzpaket von dem Basis-Decodierer empfangbar ist und das Ersatzpaket wie ein gültiges Paket gemäß der vorbestimmten Inhalts-Eigenschaft decodierbar ist;
einem Detektor (22) zum Detektieren, ob ein Paket der Folge von Paketen den Hinweis enthält und somit das Ersatzpaket ist, wobei der Detektor (22) ausgebildet ist, um den Hinweis zu interpretieren;
einer Fehlerverschleierungsreinrichtung (23) zum Synthetisieren, mittels einer Fehlerverschleierungsmaßnahme, eines Synthese-Audioinhalts für das Ersatzpaket, wobei der Synthese-Audioinhalt eine Inhalts-Eigenschaft hat, die sich von der vorbestimmten Inhalts-Eigenschaft des Audioinhalts des Ersatzpakets unterscheidet; und
einer Audio-Aufbereitungseinrichtung (24) zum Aufbereiten des Audioinhalts eines Pakets der Folge von Paketen, wenn das Paket der Folge von Paketen das Datenpaket ist, und zum Aufbereiten des Synthese-Audioinhalts, wenn das Paket der Folge von Paketen das Ersatzpaket ist.

2. Erweiterungs-Decodierer nach Anspruch 1, wobei die vorbestimmte Inhalts-Eigenschaft ein Null-Spektrum ist,
wobei die empfangenen Pakete der Folge von Paketen von einem Transformations-basierten Audiocodierer erzeugt worden sind, und
bei dem die Audio-Aufbereitungseinrichtung (24) einen Transformations-basierten Audiodecodierer (41, 42, 43) aufweist.

3. Erweiterungs-Decodierer nach Anspruch 2, bei der die Fehlerverschleierungseinrichtung (23) ausgebildet ist, um Synthese-Spektralwerte zu erzeugen, und bei der die Audio-Aufbereitungseinrichtung ausgebildet ist, um die Synthese-Spektralwerte in eine zeitliche Darstellung umzusetzen (43).

4. Erweiterungs-Decodierer nach Anspruch 1, 2 oder 3, bei der die Fehlerverschleierungseinrichtung (23) ausgebildet ist, um den Synthese-Audioinhalt durch Extrapolation eines Audioinhalts von einem vorherigen oder nachfolgenden intakten oder verschleierten Audiopaket zu erzeugen, oder
um den Synthese-Audioinhalt durch Interpolation eines Audioinhalts eines vorherigen intakten oder verschleierten Pakets und eines nachfolgenden intakten oder verschleierten Pakets zu erzeugen.

5. Erweiterungs-Decodierer nach Anspruch 1, bei dem das Ersatzpaket einen Payloadbereich hat, in dem der Hinweis angeordnet ist, und
bei dem der Detektor (22) ausgebildet ist, um zu detektieren, ob der Payloadbereich des Ersatzpaketes den Hinweis enthält.

6. Erweiterungs-Decodierer nach Anspruch 1, bei dem die Paket-Syntax ausgebildet ist, um ein extension-payload-Feld zu definieren, wobei der Hinweis durch Daten in dem extension-payload-Feld gebildet ist, und
bei dem der Detektor (22) ausgebildet ist, um zu detektieren, ob das extension-payload-Feld den Hinweis enthält.

7. Erweiterungs-Decodierer nach Anspruch 6, bei dem die Daten gemäß einem Buchstaben-Code erzeugt sind, wobei die Daten eine Bedeutung haben, die auf einen Datenverlust hinweist.

8. Erweiterungs-Decodierer nach Anspruch 7, bei dem die Daten den Ausdruck "FRAME_LOSS" oder "Datenverlust" darstellen.

9. Erweiterungs-Decodierer nach Anspruch 7 oder 8, bei dem der Buchstaben-Code der ASCII-Code ist.

10. Erweiterungs-Decodierer nach Anspruch 1, bei der die Folge von Paketen von einem Audiocodierer gemäß MPEG-1 Layer 3 oder MPEG-4 AAC erzeugt ist, wobei eine Bit-Sparkassenfunktion deaktiviert ist.

11. Erweiterungs-Decodierer nach Anspruch 1, bei dem die Paket-Syntax ein Fülldatenfeld aufweist, das von einem Basis-Encodierer gefüllt wird, wenn eine minimale für den Frame vorgesehene Anzahl von Bytes nicht zum Codieren eines Abschnitts des Audiosignals benötigt wird, wobei der Hinweis durch eine vorbestimmte Bit-Kombination in dem Fülldatenfeld dargestellt ist, und
bei dem der Detektor (22) ausgebildet ist, um zu detektieren, ob das Fülldatenfeld den Hinweis enthält.

12. Erweiterungs-Decodierer nach Anspruch 1, bei dem der Empfänger (21) zum Empfangen der Folge von Paketen ausgebildet ist, um die Folge von Paketen als eine lückenlose Folge von Paketen und Ersatzpaketen zu empfangen, die eine vollständige fortlaufende Sequenz darstellt.

13. Erweiterungs-Decodierer nach Anspruch 4, bei dem die Extrapolation oder die Interpolation bandweise Energiemessungen umfassen, um in einem Fehlerverschleierungsfall ein Kurzzeitspektrum eines Audiosignals als den Synthese-Audioinhalt zu synthetisieren, dessen Spektralwerte zumindest teilweise zufällig erzeugt worden sind, wobei eine bandweise Energie der zumindest teilweise zufällig erzeugten Spektralwerte von Energien von wenigstens einem vorherigen und/oder nachfolgenden korrekt empfangenen Paket oder von wenigstens einem bereits durch eine Fehlerverschleierungsmaßnahme erzeugten Paket abhängt.

14. Erweiterungs-Decodierer nach Anspruch 4, bei dem die Fehlerverschleierungseinrichtung (23) ausgebildet ist, so dass die Extrapolation oder die Interpolation spektralwertweise oder bandweise erfolgt,
wobei im Falle einer spektralwertweisen Extrapolation ein Spektralwert für das Ersatzpaket auf der Basis von einem oder von mehreren Spektralwerten gleicher Frequenz von einem oder mehreren früheren Paketen ermittelt wird, oder
wobei im Falle einer bandweisen Fehlerverschleierung die Spektralwerte in einem Band zufällig oder zumindest teilweise determiniert erzeugt werden, und so gewichtet werden, dass eine Energie, die die Spektralwerte repräsentieren, gleich einer Zielenergie ist, wobei diese Zielenergie von einem oder mehreren vorhergehenden Paketen und/oder von einem oder mehreren nachfolgenden Paketen abgeleitet worden ist,
wobei die vorhergehenden und/oder nachfolgenden Pakete gültige empfangene Pakete sind, oder
wobei die vorhergehenden und/oder nachfolgenden Pakete bereits von der Fehlerverschleierungseinrichtung (23) erzeugt worden sind, wenn ein Paketverlust stattgefunden hat, bei dem nicht nur ein einziges Paket untergegangen ist, sondern bei dem mehrere aufeinanderfolgende Pakete untergegangen sind.

15. Erweiterungs-Decodierer nach Anspruch 1, bei dem die Audio-Aufbereitungseinrichtung (24) folgende Merkmale aufweist:
einen Paketentpacker (40) zum Entpacken von Paketen, um Seiteninformationen von Hauptinformationen zu trennen, wobei die Hauptinformationen durch eine Folge von Bits dargestellte Kurzzeitspektren aufweisen;
einen Entropie-Decodierer (41) zum Liefern von Quantisierungsindizes aus den dem Entropie-Decodierer (41) zugeführten Hauptinformationen;
einen Dequantisierer (42) zum Liefern von quantisierten und wieder dequantisierten Spektralwerten aus den dem Dequantisierer (42) zugeführten Quantisierungsindizes; und
einen Frequenz-Zeit-Umsetzungseinrichtung (43) zum Umsetzen der quantisierten und wieder dequantisierten Spektralwerte um ein Ausgangsaudiosignal zu erzeugen,
wobei der Entropie-Decodierer (41) und der Dequantisierer (42) ausgebildet sind, um von den Seiteninformationen gesteuert zu werden, wobei der Entropie-Decodierer (41) einen Codetabellenindex erhält, während der Dequantisierer (42) Skalenfaktoren erhält.

16. Erweiterungs-Decodierer nach Anspruch 15, wobei der Paketentpacker (40) ausgebildet ist, um den Detektor (22) zu umfassen,
wobei der Paketentpacker (40) ausgebildet ist, um der Verschleierungseinrichtung (23) einen Ersatzpaket-Hinweis zu schicken, derart, dass die Verschleierungseinrichtung (23) erkennt, dass ein gerade aktuelles das Ersatzpaket ist,
wobei die Fehlerverschleierungseinrichtung (23) ausgebildet ist, um entweder dem Entropie-Decodierer (41) eine Folge von Bits zu liefern, oder dem Dequantisierer (42) eine Folge von Quantisierungsindizes zu liefern, oder der Frequenz-Zeit-Umsetzungseinrichtung (43) eine Folge von Spektralwerten zu liefern, um den Synthese-Audioinhalt einzuspeisen.

17. Erweiterungs-Decodierer nach Anspruch 16, bei dem die Fehlerverschleierungseinrichtung (23) ausgebildet ist, um bei der Frequenz-Zeit-Umsetzungseinrichtung (43) einen synthetisierten spektralen Audioinhalt als den Synthese-Audioinhalt einzuspeisen.

18. Erweiterungs-Decodierer nach Anspruch 16 oder 17, bei dem die Fehlerverschleierungseinrichtung (23) ausgebildet ist, so dass der synthetisierte spektrale Audioinhalt von einem oder mehreren bereits korrekt empfangenen vorherigen Spektren oder einem oder mehreren bereits vorliegenden nächsten Spektren abhängt, und bei dem die Fehlerverschleierungseinrichtung (23) ausgebildet ist, um eine spektralwertweise, eine bandweise oder eine gemischte, also spektralwertweise und bandweise Fehlerverschleierungsmaßnahme durchzuführen, um den Audioinhalt zu synthetisieren.

19. Erweiterungs-Decodierer nach Anspruch 1,
bei dem die Paket-Syntax (71) gemäß dem AAC-Standard (MPEG-4-Audio) ausgeführt ist, bei dem in dem Ersatzpaket das gesamte Spektrum zu Null gesetzt ist, indem ein Feld max_sfb = 0 (72) gesetzt ist, oder Spektralwerte für Skalenfaktorbänder übertragen werden, die Null sind, indem Huffman-Codebücher verwendet werden, oder das Codebuch "ZERO_HCB" (Null-Huffman-Codetabelle) verwendet wird, so dass die Spektralwerte nicht explizit zu übertragen sind,
bei dem ein Feld "extension_type" auf "0000" gesetzt ist, und bei dem in einem Feld "other_bits" in dem Feld "extension _payload" der Hinweis geschrieben ist (70), und
bei dem der Detektor (22) ausgebildet ist, um durch Interpretation des Felds "other_bits" in dem Feld "extension _payload" zu detektieren, dass das Ersatz-paket den Hinweis enthält.

20. Verfahren zum Decodieren einer Folge von Paketen in einem Erweiterungs-Decodierer, wobei der Erweiterungs-Decodierer im Vergleich zu einem Basis-Decodierer eine erweiterte Funktionalität hat, mit folgenden Schritten:
Empfangen (21) der Folge von Paketen, für die eine Paket-Syntax vorgegeben ist,
wobei die Folge von Paketen wenigstens ein Datenpaket und wenigstens ein Ersatzpaket aufweist, wobei das Ersatzpaket im Hinblick auf die Paket-Syntax ein gültiges Paket ist,
wobei ein Audioinhalt des Ersatzpakets ein vorbestimmter durch den Basis-Decodierer wiedergebbarer gültiger Audioinhalt ist und eine vorbestimmte Inhalts-Eigenschaft hat, und
wobei das Ersatzpaket einen Hinweis darauf enthält, dass es das Ersatzpaket ist, wobei der Hinweis derart ist, dass das Ersatzpaket durch den Basis-Decodierer empfangbar ist und das Ersatzpaket wie ein gültiges Paket gemäß der vorbestimmten Inhalts-Eigenschaft decodierbar ist;
Detektieren (22), ob ein Paket der Folge von Paketen den Hinweis enthält und somit das Ersatzpaket ist, wobei das Detektieren (22) ein Interpretieren des Hinweises aufweist;
für das Ersatzpaket, Synthetisieren (23) eines Synthese-Audioinhalts, wobei der Synthese-Audioinhalt eine Inhalts-Eigenschaft aufweist, die sich von der vorbestimmten Inhalts-Eigenschaft des Audioinhalts des Ersatzpakets unterscheidet, mittels einer Fehlerverschleierungsmaßnahme; und
Aufbereiten (24) des Audioinhalts eines Pakets der Folge von Paketen, wenn das Paket der Folge von Paketen das Datenpaket ist, und Aufbereiten des Synthese-Audioinhalts, wenn das Paket der Folge von Paketen das Ersatzpaket ist.

21. Computer-Programm mit einem Programmcode zum Ausführen des Verfahrens nach Anspruch 20, wenn das Verfahren auf einem Computer abläuft.

## Claims

1. Extension decoder for decoding a sequence of packets, wherein the extension decoder comprises an extended functionality as compared to a basic decoder, comprising:
a receiver (21) for receiving the sequence of packets for which a packet syntax is specified,
the sequence of packets comprising at least one data packet and at least one replacement packet, the replacement packet being a valid packet with regard to the packet syntax,
audio content of the replacement packet being predetermined valid audio content reproducible by the basic decoder and having a predetermined content characteristic and
the replacement packet containing an indication for the fact that the same is a replacement packet, wherein the indication is such that the basic decoder can receive the replacement packet and the replacement packet can be decoded like a valid packet according to the predetermined content characteristic;
detector (22) for detecting whether a packet of the sequence of packets contains the indication and consequently is the replacement packet, wherein the detector (22) is implemented to interpret the indication;
error concealing means (23) for synthesizing synthesis audio content for the replacement packet by means of an error concealing measure, the synthesis audio content comprising a content characteristic differing from the predetermined content characteristic of the audio content of the replacement packet; and
audio rendering means (24) for rendering the audio content of a packet of the sequence of packets when the packet of the sequence of packets is the data packet and for rendering the synthesis audio content when the packet of the sequence of packets is the replacement packet.

2. Extension decoder of claim 1, wherein the predetermined content characteristic is a zero spectrum,
wherein the received packets of the sequence of packets have been generated by a transform-based audio encoder and
wherein the audio rendering means (24) comprises a transform-based audio decoder (41, 42, 43).

3. Extension decoder of claim 2, wherein the error concealing means (23) is implemented to generate synthesis spectral values and
wherein the audio rendering means is implemented to convert the synthesis spectral values to a temporal representation (43).

4. Extension decoder of claim 1, 2 or 3, wherein the error concealing means (23) is implemented to generate the synthesis audio content by extrapolation of audio content from a previous or subsequent intact or concealed audio packet, or
to generate the synthesis audio content by interpolation of audio content of a previous intact or concealed packet and a subsequent intact or concealed packet.

5. Extension decoder of claim 1, wherein the replacement packet has a payload region where the indication is located and
wherein the detector (22) is implemented to detect whether the payload region of the replacement packet contains the indication.

6. Extension decoder of claim 1, wherein the packet syntax is implemented to define an extension payload field, wherein the indication is formed by data in the extension payload field and
wherein the detector (22) is implemented to detect whether the extension payload field contains the indication.

7. Extension decoder of claim 6, wherein the data are generated in accordance with a letter code, the data having a meaning indicating a data loss.

8. Extension decoder of claim 7, wherein the data represent the expression "FRAME_LOSS" or "data loss".

9. Extension decoder of claim 7 or 8, wherein the letter code is the ASCII code.

10. Extension decoder of claim 1, wherein the sequence of packets is generated by an audio encoder according to MPEG-1 layer 3 or MPEG-4 AAC, a bit reservoir function being disabled.

11. Extension decoder of claim 1, wherein the packet syntax comprises a fill data field which is filled by a basic encoder when a minimum number of bytes provided for the frame is not required for encoding a portion of the audio signal, wherein the indication is represented by a predetermined bit combination in the fill data field, and wherein the detector (22) is implemented to detect whether the fill data field contains the indication.

12. Extension decoder of claim 1, wherein the receiver for receiving the sequence of packets is implemented to receive the sequence of packets as continuous sequence of packets and replacement packets representing a complete continuous sequence.

13. Extension decoder of claim 4, wherein the extrapolation or the interpolation include band-wise energy measurements to synthesize, in an error concealment case, a short-time spectrum of an audio signal as the synthesis audio content, the spectral values of which have been generated in a more or less random manner, wherein a band-wise energy of the spectral values generated in a more or less random manner depends on energies of at least one of the previous and/or subsequent correctly received packets or of at least one packet already generated by an error concealment measure.

14. Extension decoder of claim 4, wherein the error concealment means (23) is implemented such that the extrapolation or the interpolation is performed relating to spectral values or to bands,
wherein in the case of extrapolation relating to spectral values, a spectral value for the replacement packet is determined based on one or several spectral values of the same frequency of one or several previous packets or
wherein in the case of error concealment relating to bands, the spectral values are generated in one band in a random or at least partly determined way and are weighted such that an energy represented by the spectral values equals a target energy, this target energy having been derived from one or several previous packets and/or one or several subsequent packets,
wherein the previous and/or subsequent packets are valid received packets or wherein the previous and/or subsequent packets have already been generated by the error concealment means (23) when packet loss has occurred where not only a single packet was lost but several successive packets were lost.

15. Extension decoder of claim 1, wherein the audio rendering means (24) comprises:
a packet unpacker (14) for unpacking packets so as to separate side information from main information, wherein the main information comprise short-time spectra represented by a sequence of bits;
an entropy decoder (41) for providing quantizing indices from the main information supplied to the entropy decoder (41);
a de-quantizer (42) for providing quantized and again de-quantized spectral values from the quantizing indices supplied to the de-quantizer (42); and
frequency-time conversion means (43) for converting the quantized and again de-quantized spectral values to generate an output audio signal,
wherein the entropy decoder (41) and the de-quantizer (42) are implemented to be controlled by the side information, wherein the entropy decoder (41) receives a code table index while the de-quantizer (42) receives scaling factors.

16. Extension decoder of claim 15, wherein the packet unpacker (14) is implemented to include the detector (22),
wherein the packet unpacker (14) is implemented to send a replacement packet indication to the concealing means (23) such that the concealing means (23) recognizes that a current packet is the replacement packet,
wherein the error concealment means (23) is implemented to provide the entropy decoder (41) with a sequence of bits, or to provide the de-quantizer (42) with a sequence of quantizing indices or to provide the frequency-time conversion means (43) with a sequence of spectral values to feed the synthesis audio content.

17. Extension decoder of claim 16, wherein the error concealment means (23) is implemented to feed a synthesized spectral audio content as the synthesis audio content at the frequency-time conversion means (43).

18. Extension decoder of claim 16 or 17, wherein the error concealment means (23) is implemented such that the synthesized spectral audio content depends on one or several previous spectra already received correctly or one or several already present next spectra, and wherein the error concealment means (23) is implemented to perform error concealing measures relating to spectral values, bands or both, i.e., relating to both spectral values and bands, to synthesize the audio content.

19. Extension decoder of claim 1,
wherein the packet syntax (71) is executed according to the AAC standard (MPEG-4-audio), wherein, in the replacement packet, the entire spectrum is set to zero by setting a field max_sfb = 0 (72), or spectral values are transmitted for scaling factor bands that are zero by using Huffman code books or by using the code book "ZERO_HCB" (Zero Huffman Code Table), such that the spectral values do not explicitly have to be transmitted,
wherein a field "extension_type" is set to "0000", and wherein the indication is written (70) in a field "other_bits" in the field "extension_payload" and
wherein the detector (22) is implemented to detect that the replacement packet includes the indication by interpolation of the field "extension_payload" in the field "other_bits".

20. Method for decoding a sequence of packets in an extension decoder, wherein the extension decoder comprises an extended functionality as compared to a basic decoder, comprising:
receiving (21) the sequence of packets for which a packet syntax is specified,
the sequence of packets comprising at least one data packet and at least one replacement packet, the replacement packet being a valid packet with regard to the packet syntax,
the audio content of the replacement packet being predetermined valid audio content reproducible by the basic decoder and having a predetermined content characteristic, and
the replacement packet containing an indication for the fact that the same is a replacement packet, wherein the indication is such that a basic decoder can receive the replacement packet and the replacement packet can be decoded like a valid packet according to the predetermined content characteristic;
detecting (22) whether a packet of the sequence of packets contains the indication and consequently is the replacement packet, wherein detecting (22) comprises interpreting the indication;
for the replacement packet, synthesizing (23) synthesis audio content by means of an error concealing measure, the synthesis audio content comprising a content characteristic differing from the predetermined content characteristic of the audio content of the replacement packet; and
rendering (24) the audio content of a packet of the sequence of packets when the packet of the sequence of packets is the data packet and rendering the synthesis audio content when the packet of the sequence of packets is the replacement packet.

21. Computer program having a program code for performing the method of claim 20 when the method runs on a computer.

## Revendications

1. Décodeur d'extension pour décoder une séquence de paquets, dans lequel le décodeur d'extension présente une fonctionnalité étendue en comparaison avec un décodeur de base, aux caractéristiques suivantes:
un récepteur (21) destiné à recevoir la séquence de paquets pour laquelle est prédéterminée une syntaxe de paquet,
dans lequel la séquence de paquets présente au moins un paquet de données et au moins un paquet de remplacement, dans lequel le paquet de remplacement est un paquet valide en ce qui concerne la syntaxe de paquet,
dans lequel un contenu audio du paquet de remplacement est un contenu audio valide prédéterminé pouvant être reproduit par le décodeur de base et présente une propriété de contenu prédéterminée, et
dans lequel le paquet de remplacement contient une indication sur le fait qu'il s'agit d'un paquet de remplacement, dans lequel l'indication est telle que le paquet de remplacement puisse être reçu par le décodeur de base et que le paquet de remplacement puisse être décodé comme un paquet valide selon la propriété de contenu prédéterminée;
un détecteur (22) destiné à détecter si un paquet de la séquence de paquets contient l'indication et est donc le paquet de remplacement, où le détecteur (22) est conçu pour interpréter l'indication;
un moyen de masquage d'erreur (23) destiné à synthétiser, au moyen d'une mesure de masquage d'erreur, un contenu audio de synthèse pour le paquet de remplacement, où le contenu audio de synthèse présente une propriété de contenu qui diffère de la propriété de contenu prédéterminée du contenu audio du paquet de remplacement; et
un moyen de traitement d'audio (24) destiné à traiter le contenu audio d'un paquet de la séquence de paquets si le paquet de la séquence de paquets est le paquet de données, et à traiter le contenu audio de synthèse si le paquet de la séquence de paquets est le paquet de remplacement.

2. Décodeur d'extension selon la revendication 1, dans lequel la propriété de contenu prédéterminée est un spectre nul,
dans lequel les paquets reçus de la séquence de paquets ont été générés par un codeur audio base de transformation, et
dans lequel le dispositif de traitement audio (24) présente un décodeur audio à base de transformation (41, 42, 43).

3. Décodeur d'extension selon la revendication 2, dans lequel le moyen de masquage d'erreur (23) est conçu pour générer des valeurs spectrales de synthèse, et
dans lequel le moyen de traitement audio est conçu pour convertir les valeurs spectrales de synthèse en une représentation temporelle (43).

4. Décodeur d'extension selon la revendication 1, 2 ou 3, dans lequel le moyen de masquage d'erreur (23) est conçu pour générer le contenu audio de synthèse par extrapolation d'un contenu audio d'un paquet audio intact ou masqué précédent ou suivant, ou
pour générer le contenu audio de synthèse par extrapolation d'un contenu audio d'un paquet intact ou masqué précédent et d'un paquet intact ou masqué suivant.

5. Décodeur d'extension selon la revendication 1, dans lequel le paquet de remplacement présente une zone de charge utile dans laquelle est disposée l'indication, et
dans lequel le détecteur (22) est conçu pour détecter si la zone de charge utile du paquet de remplacement contient l'indication.

6. Décodeur d'extension selon la revendication 1, dans lequel la syntaxe de paquet est conçue pour définir un champ de charge utile d'extension, dans lequel l'indication est formée par des données dans le champ de charge utile d'extension, et
dans lequel le détecteur (22) est conçu pour détecter si le champ de charge utile d'extension contient l'indication.

7. Décodeur d'extension selon la revendication 6, dans lequel les données sont générées selon un code à lettres, dans lequel les données ont une signification qui indique une perte de données.

8. Décodeur d'extension selon la revendication 7, dans lequel les données représentent l'expression "FRAME_LOSS" ou "perte de données".

9. Décodeur d'extension selon la revendication 7 ou 8, dans lequel le code à lettres est le code ASCII.

10. Décodeur d'extension selon la revendication 1, dans lequel la séquence de paquets est générée par un codeur audio selon MPEG-1 Layer 3 ou MPEG-4 AAC, où une fonction de banque de bits est désactivée.

11. Décodeur d'extension selon la revendication 1, dans lequel la syntaxe de paquet présente un champ de données de remplissage qui est rempli par un codeur de base lorsqu'un nombre minimum d'octets prévu pour la trame n'est pas requis pour coder un segment du signal audio, dans lequel l'indication est représentée par une combinaison de bits prédéterminée dans le champ de données de remplissage, et
dans lequel le détecteur (22) est conçu pour détecter si le champ de données de remplissage contient l'indication.

12. Décodeur d'extension selon la revendication 1, dans lequel le récepteur (21) destiné à recevoir la séquence de paquets est conçu pour recevoir la séquence de paquets comme une séquence complète de paquets et de paquets de remplacement qui représente une séquence continue complète.

13. Décodeur d'extension selon la revendication 4, dans lequel l'extrapolation ou l'interpolation comporte des mesures d'énergie par bande pour synthétiser, en cas de masquage d'erreur, un spectre à court terme d'un signal audio comme contenu audio de synthèse dont les valeurs spectrales ont été générées au moins partiellement de manière aléatoire, dans lequel une énergie par bande des valeurs spectrales des énergies générées au moins partiellement de manière aléatoire dépend d'au moins un paquet reçu correctement précédent et/ou suivant ou d'au moins un paquet déjà généré par une mesure de masquage d'erreur.

14. Décodeur d'extension selon la revendication 4, dans lequel le moyen de masquage d'erreur (23) est conçu de sorte que l'extrapolation ou l'interpolation ait lieu par valeur spectrale ou par bande,
dans lequel, dans le cas d'une extrapolation par spectrale valeur, une valeur spectrale pour le paquet de remplacement est déterminée sur base d'une ou plusieurs valeurs spectrales de même fréquence d'un ou plusieurs paquets précédents, ou
dans lequel, dans le cas d'un masquage d'erreur par bande, les valeurs spectrales dans une bande sont générées de manière aléatoire ou au moins partiellement déterminée, et sont pondérées de sorte qu'une énergie que représentent les valeurs spectrales soit égale à une énergie cible, où cette énergie cible a été dérivée d'un ou plusieurs paquets précédents et/ou d'un ou plusieurs paquets suivants,
dans lequel les paquets précédents et/ou suivants sont des paquets reçus valides, ou
dans lequel les paquets précédents et/ou suivants ont déjà été générés par le moyen de masquage d'erreur (23) lorsqu'a eu lieu une perte de paquets dans laquelle non seulement un seul paquet a été perdu, mais dans laquelle plusieurs paquets successifs ont été perdus.

15. Décodeur d'extension selon la revendication 1, dans lequel le moyen de traitement audio (24) présente les caractéristiques suivantes:
un décompresseur de paquets (40) destiné à décompresser des paquets pour séparer les informations latérales des informations principales, où les informations principales présentent des spectres à court terme représentés par une séquence de bits;
un décodeur entropique (41) destiné à fournir des indices de quantification à partir des informations principales alimentées vers le décodeur entropique (41);
un déquantificateur (42) destiné à fournir des valeurs spectrales quantifiées et re-déquantifiées à partir des indices de quantification alimentés vers déquantificateur (42); et
un moyen de conversion fréquence-temps (43) destiné à convertir les valeurs spectrales quantifiées et re-déquantifiées pour générer un signal audio de sortie,
dans lequel le décodeur entropique (41) et le déquantificateur (42) sont conçus pour être commandés par les informations latérales, dans lequel le décodeur entropique (41) reçoit un indice de tableau de codes, tandis que le déquantificateur (42) reçoit des facteurs d'échelle.

16. Décodeur d'extension selon la revendication 15, dans lequel le décompresseur de paquets (40) est conçu pour comporter le détecteur (22),
dans lequel le décompresseur de paquets (40) est conçu pour envoyer au moyen de masquage (23) une indication de paquet de remplacement, de sorte que le moyen de masquage (23) reconnaisse qu'un paquet de remplacement est précisément le paquet actuel,
dans lequel le moyen de masquage d'erreur (23) est conçu pour soit fournir une séquence de bits au décodeur entropique (41), soit fournir une séquence d'indices de quantification au déquantificateur (42), soit fournir une séquence de valeurs spectrales au moyen de conversion fréquence-temps (43) pour alimenter le contenu audio de synthèse.

17. Décodeur d'extension selon la revendication 16, dans lequel le moyen de masquage d'erreur (23) est conçu pour alimenter dans le moyen de conversion fréquence-temps (43) un contenu audio spectral synthétisé comme contenu audio de synthèse.

18. Décodeur d'extension selon la revendication 16 ou 17, dans lequel le moyen de masquage d'erreur (23) est conçu de sorte que le contenu audio spectral synthétisé dépende d'un ou plusieurs spectres précédents déjà reçus correctement ou d'un ou plusieurs spectres suivants déjà présents, et dans lequel le moyen de masquage d'erreur (23) est conçu pour effectuer une mesure de masquage d'erreur par valeur spectrale, par bande ou mixte, donc par valeur spectrale et par bande, pour synthétiser le contenu audio.

19. Décodeur d'extension selon la revendication 1,
dans lequel la syntaxe de paquet (71) est exécutée selon la norme AAC (MPEG-4-Audio), dans lequel, dans le paquet de remplacement. le spectre complet est mis à zéro en réglant un champ max_sfb = 0 (72), ou des valeurs spectrales pour les bandes de facteurs d'échelle qui sont zéro sont transmises en utilisant des livres de codes de Huffman, ou le livre de codes "ZERO_HCB" (tableau de codes zéro de Huffman) est utilisé de sorte que les valeurs spectrales ne doivent pas être transmises explicitement,
dans lequel un champ " extension-type" est réglé à "0000", et dans lequel dans un champ "other_bits" dans le champ "extension-payload" est écrite l'indication (70), et
dans lequel le détecteur (22) est conçu pour détecter, par interprétation du champ "other_bits" dans le champ "extension_payload", que le paquet de remplacement contient l'indication.

20. Procédé de décodage d'une séquence de paquets dans un décodeur d'extension, dans lequel le décodeur d'extension présente une fonctionnalité étendue en comparaison avec un décodeur de base, aux étapes suivantes consistant à:
recevoir (21) la séquence de paquets pour laquelle est prédéterminée une syntaxe de paquet,
dans lequel la séquence de paquets présente au moins un paquet de données et au moins un paquet de remplacement, dans lequel le paquet de remplacement est un paquet valide en ce qui concerne la syntaxe de paquet,
dans lequel un contenu audio du paquet de remplacement est un contenu audio valide prédéterminé pouvant être reproduit par le décodeur de base et présente une propriété de contenu prédéterminée, et
dans lequel le paquet de remplacement contient une indication sur le fait qu'il s'agit d'un paquet de remplacement, dans lequel l'indication est telle que le paquet de remplacement puisse être reçue par le décodeur de base et que le paquet de remplacement puisse être décodé comme un paquet valide selon la propriété de contenu prédéterminée;
détecter (22) si un paquet de la séquence de paquets contient l'indication et est donc le paquet de remplacement, où la détection (22) présente le fait d'interpréter l'indication;
pour le paquet de remplacement, synthétiser (23) un contenu audio de synthèse, où le contenu audio de synthèse présente une propriété de contenu qui diffère de la propriété de contenu prédéterminée du contenu audio du paquet de remplacement, au moyen d'une mesure de masquage d'erreur; et
traiter (24) le contenu audio d'un paquet de la séquence de paquets lorsque le paquet de la séquence de paquets est le paquet de données, et traiter le contenu audio de synthèse lorsque le paquet de la séquence de paquets est le paquet de remplacement.

21. Programme d'ordinateur avec un code de programme pour réaliser le procédé selon la revendication 20 lorsque le procédé est exécuté sur un ordinateur.
